# EUROPÄISCHE PATENTSCHRIFT

(11) **EP 2 729 392 B1**
(45) Veröffentlichungstag und Bekanntmachung des Hinweises auf die Patenterteilung: **07.10.2015**
(21) Anmeldenummer: 12732651.0
(22) Anmeldetag: 04.07.2012
(51) Int. Cl.: B65G 33/26, B65G 33/34

(54) **FÖRDERVORRICHTUNG FÜR HETEROGENE, EMPFINDLICHE UND NICHT PUMPFÄHIGE LEBENSMITTEL MIT GERINGEM FLÜSSIGKEITSANTEIL**
CONVEYING DEVICE FOR HETEROGENEOUS, SENSITIVE FOODS THAT CANNOT BE PUMPED AND HAVE A LOW LIQUID CONTENT
DISPOSITIF DE TRANSPORT POUR DES PRODUITS ALIMENTAIRES HÉTÉROGÈNES, SENSIBLES ET INAPTES AU POMPAGE PRÉSENTANT UNE FAIBLE PROPORTION DE LIQUIDE

(30) Priorität: 06.07.2011 DE 102011051599
(43) Veröffentlichungstag der Anmeldung: 14.05.2014
(73) Patentinhaber: Maschinenfabrik Leonhardt GmbH, 63303 Dreieich (DE)
(72) Erfinder: KERSCHBAUMER, Eric, 63303 Dreieich (DE)
(74) Vertreter: Meyer-Dulheuer, Karl-Hermann
(86) Internationale Anmeldenummer: PCT/EP2012/063057
(87) Internationale Veröffentlichungsnummer: WO 2013/004757

(56) Entgegenhaltungen:
- CN-U- 2 078 971
- DE-A1- 2 626 196
- DE-A1- 10 261 058
- DE-A1- 19 520 992
- DE-U1-202004 016 295
- US-B1- 7 222 725

## Beschreibung

Die Erfindung betrifft eine Fördervorrichtung für heterogene empfindliche und nicht pumpfähige Lebensmittel mit geringem Flüssigkeitsanteil, bei welchen es sich bevorzugt um Lebensmittel für den Fertiggebrauch handelt. Im speziellen werden Lebensmittel wie beispielsweise, aber nicht ausschließlich, gekochte oder gebratene asiatische Nudel- und Reisgerichte, Gemüsesalate, Pastasalate oder mit Sauce benetzte Teigwaren befördert.

Durch diverse soziale Gesellschaftsaspekte stieg und steigt die Bedeutung von Fertiggerichten massiv an, und dieser steigende Bedarf zeigt sich in der ebenfalls steigenden Auswahl der Fertiggerichte. Globale "Foodtrends" strukturieren den Lebensmittelmarkt um und stellen die Lebensmittelbranche immer wieder vor eine neue Problematik. Die Anforderungen an die Lebensmittelhersteller und -verarbeiter hinsichtlich der Vielfalt und Qualität steigen stetig, und dem Endverbraucher werden immer mehr verschiedene Fertiggerichte angeboten, welche natürlich entsprechend zubereitet und verpackt werden müssen.

Aus der Patentschrift DE 34 41 425 C2 ist bekannt, dass eine Förderschnecke zum Transport von Lebensmitteln verwendet werden kann. Diese Förderschnecke wird nach dem archimedischen Schraubenprinzip dazu verwendet, um geschnitzeltes Roh-Gemüse und geschnitzelten Roh-Salat unter Einsatz einer Schräg-Förderschnecke nach oben zu transportieren. Aus dem Stand der Technik ist ebenfalls bekannt, dass Förderschnecken speziell zur Förderung von Trockengut und zum Transport von kleinartigem und flockigem Schüttgut auch im wirtschaftlichen Bereich eingesetzt werden.

Die aus dem Stand der Technik bekannte DE 18 13 219 A offenbart einen Schneckenförderer, der in einem zylindrischen Gehäuse befindlich ist und dessen drehbare Schnecke einen von der Schnecke unabhängigen Innenteil ausweist, welcher mit unterschiedlicher Winkelgeschwindigkeit drehbar ist oder freistehend gehalten wird, um idealerweise pulvrige oder teigige Lebensmittel zu befördern.

Aus DE 195 20 992 A1 ist eine Schneckenförderanlage offenbart, die zum Entfernen von Abfall in Wasser verwendet wird. Dieser Stand der Technik offenbart drei verschiedene Bereiche der verwendeten Förderschnecke, von denen ein Bereich, nämlich jener, der dem Antrieb am nächsten ist, als seelenlose Schnecke ausgeführt ist. Diese Ausführung gleicht den teilweise stark schwankenden Eintrag an Fördermaterial aus.

DE 102 61 058 A1 beschreibt eine Streustoffaustragvorrichtung für ein Winterdienststreufahrzeug, bei welcher eine Förderschnecke den Streustoff von einem Streustoffreservoir zu einer Fallrohröffnung befördert. Zur Entklumpung des Streustoffs sind auf der rotierenden Schnecke zwei streng radial nach außen aufgebrachte Stiftreihen angebracht.

Aus der DE 20 2004 016295 U1 ist ein Späneförderer bekannt, dessen Endlosförderer als hohle Förderschnecke ausgebildet ist, die sich um einen feststehenden Kern in einem nach oben hin offenen Förderkanal dreht. Die Späne fallen dabei über ein geneigtes Blech seitlich in den Förderkanal und werden dann entlang des Kerns zur Austragsseite transportiert.

Die US 7 222 725 B1 offenbart einen Stiftförderer für pastöse Materialien. Entlang einer Zentralwelle sind dabei in helicaler Ausrichtung Stifte angeordnet, auf denen bewegliche Hülsen sitzen, die durch die Zentrifugalkräfte beim Betrieb des Förderers an die umgebende Innenwand des Förderzylinders gedrückt werden und diese so von anhaftendem Fördergut reinigen.

In der DE 26 26 196 A1 wird eine Fördervorrichtung für Schüttgüter mit einem rohrförmigen oder schlauchartigen Gehäuse, das vorzugsweise biegsam ist, beschrieben. Die Förderschnecke wird dabei von einem wendelförmigen Stahldraht oder -band gebildet und ist einstückig über die gesamte Förderstrecke gezogen. Sie ist über die gesamte Förderlänge seelenlos.

Nachteilig an den aus dem Stand der Technik bekannten Vorrichtungen ist, dass das Fördergut nicht so pfleglich behandelt wird, dass der Warenausschuss möglichst gering gehalten wird.

Durch den zunehmenden Trend zu Fertiggerichten wie beispielsweise asiatischen Nudel- oder Reisgerichten wird die verarbeitende Lebensmittelbranche ständig vor neue Aufgaben gestellt. Die feine und oft fragile Struktur der verwendeten Ingredienzien, die für solche speziellen Fertiggerichte verwendet werden, sollen als Ganzes der Verpackungsmaschine zugeführt und dabei die durch Einwirkung von Scherkräften entstehende Ausschussware möglichst gering gehalten werden.

Aus der Praxis wird bekannt, dass gerade beim Transport zwischen dem Vorratsbehältnis und der Abfüllung in der entsprechenden Dosiermaschine die Verluste durch das Entstehen von Ausschussware besonders hoch sind.

Wenn Lebensmittel durch ein Förderbandsystem oder durch eine fest verbaute Förderschnecke von dem Vorratsbehältnis zur Dosiermaschine befördert werden, wird bisher auf die Empfindlichkeit der Lebensmittel höchstens in Hinblick auf die Verarbeitungstemperaturen geachtet. Die auftretenden Scherkräfte werden im Regelfall nicht beachtet, was zu einem Verformen der empfindlichen Ware führt, wobei der Ausschuss der Lebensmittel entsprechend hoch ist.

Es stellt sich deshalb die Aufgabe, dass die zu transportierenden empfindlichen Lebensmittel möglichst schonend und mit minimalem Druck und minimalen Scherkräften transportiert werden. Gelöst wird diese Aufgabe durch die erfindungsgemäße Vorrichtung, welche im Gegensatz zu den zum Stand der Technik gehörigen Vorrichtungen den entscheidenden Vorteil hat, dass gerade auf die Fragilität der verarbeiteten Lebensmittel Rücksicht genommen wird und es aufgrund der Ausgestaltungsform der Förderschnecke und der Geometrie des entsprechenden Behälterauslaufs zu einem schonenden Umgang mit den zu verpackenden Lebensmitteln kommt.

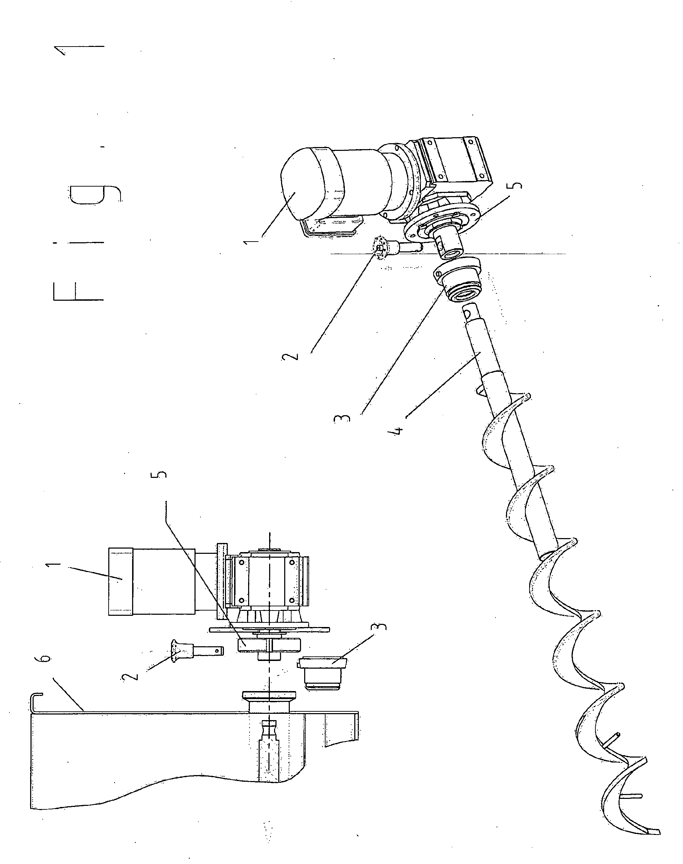

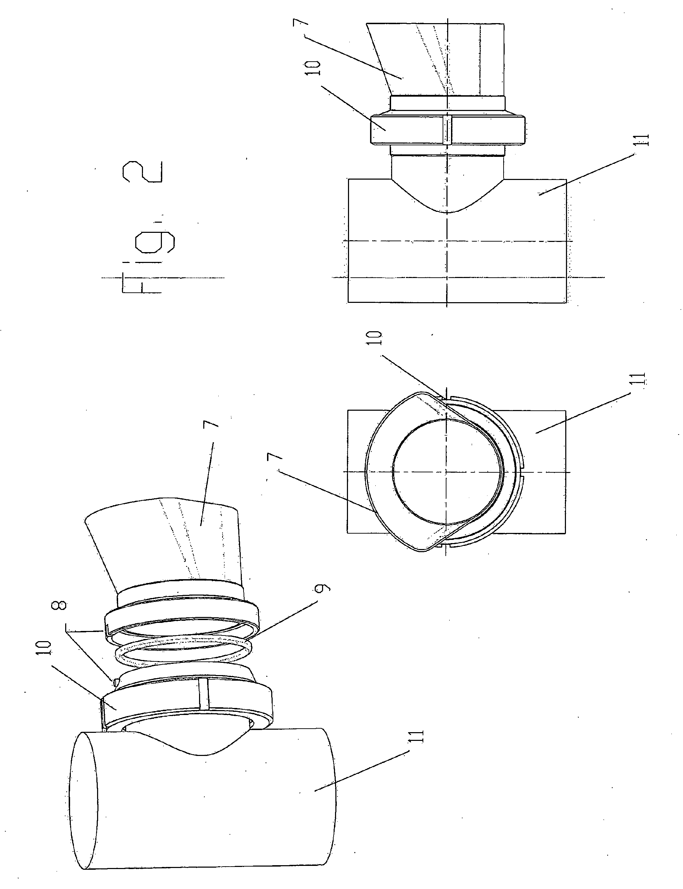

Wie aus Fig. 1 und Fig. 2 ersichtlich ist, besteht die beanspruchte Vorrichtung aus einem Antriebsmotor **1,** dessen rotierende Welle mittels eines Verbindungsbolzens **2** mit der Schneckenwelle **4** verbunden ist. Durch die Lage des Antriebsmotors **1**, welcher sich vorteilhaft außerhalb des Schneckentrogs befindet, wird die Welle des Antriebsmotors **1** und Schneckenwelle **4** über einen Lagerflansch **3** durch die Rückwand des Vorratsbehälters **6** geführt. Die Förderschnecke selbst ist so ausgeführt, dass der antriebsferne Teil als seelenlose Förderschnecke ausgeführt wird und zusätzliche Dornen besitzt, welche radial zum Rotationsmittelpunkt der Förderschnecke **4** zeigen. Am antegraden Ende, also dem Ende, welches in Bewegungsrichtung nach vorne gerichtet ist, befindet sich das Anschlussstück zur Frontwand **7**, welches eine spezielle geometrische Form ausweist und damit Scherkräfte und den Druck auf die fragilen und empfindlichen Lebensmittel minimiert. Die Verbindung zwischen dem Anschlussstück zur Frontwand **7** und dem Behälterauslass **11** wird durch eine Verdrehsicherung **8** und eine Verschraubungsdichtung **9** so gesichert, dass das Anschlussstück zur Frontwand **7** auch in seiner Lage durch die Scher- und Druckkräfte nicht verändert wird bzw. eine dichte Verbindung zwischen den einzelnen Komponenten besteht. Zudem sollten alle Komponenten aus Materialien bestehen, die für lebensmittelproduzierende bzw. -verarbeitende Betriebe zugelassen sind und entsprechende Auflagen erfüllen.

Die Förderschnecke **4**, welche in der erfindungsgemäßen Vorrichtung vorzugsweise als Hohlschnecke ausgeführt ist, wird durch einen Antriebsmotor **1**, welcher sich bevorzugt an der Rückwand des Vorratsbehälters **6** befindet, angetrieben. Der Antriebsmotor **1** kann mannigfaltig angesteuert werden, im Idealfall wird er mittels einer üblichen "speicherprogrammierbaren Steuerung" (SPS) gesteuert. Diese der Anwendung angepasste und vollelektronische speicherprogrammierbare Motorsteuerung kann im Idealfall natürlich dem jeweiligen Verarbeitungsmittel angepasst werden und je nach Bedarf, Konsistenz bzw. Fragilität des zu verarbeitenden Lebensmittels die Förderhohlschnecke **4** mit einer entsprechenden Drehzahl und Drehrichtung beaufschlagen.

Die bevorzugte Ausführungsform der Motorlage ist so zu wählen, dass das Motorgehäuse nicht mit den zu fördernden Medien in Kontakt kommt. Aus der Praxis ist bekannt, dass die bisher verwendeten Förderanlagen variabel von der Auftragslage auch im Schichtbetrieb verwendet werden und sich bei entsprechender Dauerbelastung aufgrund ihrer bevorzugten Ausführungsform als Drehstrommotor eine Betriebstemperatur einstellt, die mit der Verarbeitungstemperatur der Lebensmittel nicht zu vereinbaren ist.

Der Antriebsmotor **1** kann nach Anspruch 2 direkt mit der Förderschnecke **4** verbunden sein, oder im Fall einer senkrechten Ausgestaltungsform über beispielsweise ein Kegelradgetriebe seine Rotationsbewegung an die Förderschnecke **4** weitergeben. Als Verbindung zwischen der Rotorwelle des Antriebsmotors **1** und der Schneckenwelle **4** wird eine entsprechende formschlüssige Verbindung vorgesehen, welche in der erfindungsgemäßen Vorrichtung als Lagerflansch **3** gelagert wird.

Die vorliegende Ausführungsform mit einem Lagerflansch **3** und einem Verbindungbolzen **2** hat gegenüber dem Stand der Technik den bedeutenden Vorteil, dass die formschlüssige Verbindung sehr einfach durch einen Anwender zu lösen und ohne Verwendung von Spezialwerkzeug auszubauen ist. In dieser sehr sensiblen Umgebung, welche branchenspezifisch über ausgeprägte Hygienevorschriften verfügt, hat das Warten und Ausbauen von Anlagenteilen ohne Werkzeug überdies den erheblichen Vorteil, dass die Möglichkeit der Bildung von Metallspänen durch Scherbewegungen an Gewinden und ähnlichem nicht in Betracht gezogen werden muss. Durch die spezielle Ausführungsform dieser formschlüssigen Verbindung werden überdies die täglichen Wartungs- und Reinigungszeiten erheblich verkürzt und kostspielige lange Stehzeiten der Anlage minimiert.

Durch diese Ausgestaltung wird der Arbeitsschritt des Zerlegens beim Warten und Reinigen auf wenige einfache Handgriffe dezimiert und muss dadurch nicht zwingend durch hochqualifiziertes Fachpersonal durchgeführt werden, sondern kann mit sehr geringem Aufwand jedem angelernten Mitarbeiter vermittelt werden. Des Weiteren ist es durch diese Ausgestaltung möglich, die einzelnen Bauteile ebenfalls mit sehr wenig Aufwand auszutauschen und bei eventuellen Fehlern eine sehr schnelle Fehlersuche durchzuführen. Grundsätzlich spielt die Einfachheit und Robustheit der Ausführungsform der erfindungsgemäßen Vorrichtung eine bedeutende Rolle, da aufgrund der branchenbedingten Standards durchwegs auf Klein- und Kleinstteile verzichtet wird und die Ausführungen der Einzelteile so gestaltet ist, dass das Fehlen eines Bauteils nach einer Wartung oder einer Reinigung dem jeweiligen Service- oder Anwendungspersonal auffallen würde. Diese Ausgestaltungsform verhindert also, dass Klein- und Kleinstteile in den Transport-, Dosierungs- und Verpackungsprozess gelangen und mitverarbeitet werden und so die vom Endkunden gestellten Qualitätsanforderungen an die Lebensmittel nicht eingehalten werden können. Durch die entsprechenden Ausführungen, welche bei der vorliegenden neuheitlichen Erfindung gegeben sind, kann dies nicht passieren, da auf Klein- und Kleinstteile verzichtet wurde und ein Mitverarbeiten von Maschinenteilen dadurch nicht gegeben ist.

Der Lagerflansch **3**, welcher die Schneckenwelle **4** motorseitig durch den Schneckentrog führt, sollte ebenfalls aus einem Material beschaffen sein, welches den branchenüblichen Hygienestandards entspricht, und an die jeweils verwendete Schneckenwelle **4** so angepasst sein, dass eine formschlüssige Verbindung zwischen den Komponenten gegeben ist.

Die Förderschnecke **4** selbst dient primär zum Transportieren des jeweiligen Mediums und kann je nach Maßgabe der zu transportierenden Lebensmittel entsprechend ausgeführt werden. Die erfindungsgemäße Vorrichtung sieht diesbezüglich vor, dass die Ausgestaltung der Förderschnecke an die Lebensmittel so angepasst ist, dass sie der Aufgabenstellung und den zu fördernden Lebensmitteln angepasst wird.

Neben der Aufgabe der Beförderung der Lebensmittel verhindert die Förderschnecke **4** bei der Verwendung von empfindlichen, nicht pumpfähigen Nahrungsmitteln, dass das Fördermedium komprimiert wird und somit die Anlagenteile mit unnötigen Scher- und Druckkräften beaufschlagt werden, bzw. diese Druckkräfte nach Möglichkeit gemindert werden. Die Beschaffenheit des Fördermediums, welches von der Konsistenz und der Empfindlichkeit der jeweiligen Ingredienzien geprägt wird, wird mit der entsprechenden Ausgestaltung der Förderschnecke **4** ebenfalls aufgelockert und schonend in Richtung des Behälterauslasses **11** transportiert. Die Förderschnecke **4** wird hier vorzugswese teilweise als seelenlose Förderschnecke **4** ausgeführt, was zur Folge hat, dass das jeweilige Lebensmittel durch das Fehlen einer Achse schonender in der axialen Richtung der Förderschnecke **4** bewegt werden kann. Dieser Umstand wird durch die sich ebenfalls auf der Förderschnecke **4** befindlichen Dornen, welche radial angeordnet sind und in Richtung des Rotationsmittelpunktes der Förderschnecke **4** ausgerichtet sind, unterstützt und durch die spezielle Ausgestaltung der teilweise seelenlosen Förderschnecke wird das Lebensmittel aufgelockert und so von etwaig auftretenden Scherkräften entlastet.

Der Behälterauslass **11** ist in der erfindungsgemäßen Vorrichtung so ausgeführt, dass am Behälterauslass **11** des antegraden Endes des Schneckentrogs ein zusätzliches Anschlussstück zur Frontwand **7** angebracht ist, welches durch eine spezielle Geometrie die Scherkräfte des durch die Förderschnecke **4** transportierten Mediums mindert und empfindliche und fragile Bestandteile der Transportmedien nicht unnötig den im Regelfall auftretenden Scherkräften aussetzt.

Die Ausgestaltung des Anschlussstück zur Frontwand **7** verhindert beispielsweise, dass Nudeln, welche oft Bestandteil der modernen Fertiggerichtproduktion sind, an der Behälterauslasskante brechen oder durch selbige deformiert werden und dementsprechend nicht mehr oder nur noch bedingt dem Endverbraucher zugemutet werden können.

Das Anschlussstück zur Frontwand **7**, welches mittels einer entsprechenden Verbindungsmutter **10** an den Behälter angebracht wird, weist eine halbseitige gerade Hohlzylinderform auf, die den unteren Teil des Verbindungstückes darstellt, und einen oberen Teil des Verbindungsstückes, welcher durch einen halben geraden Hohlkreiskegelstumpf beschrieben werden kann. Der obere Teil des Verbindungsstücks wird mit dem unteren Teil des Verbindungsstücks so verbunden, dass zwischen den Schnittflächen der Mantelfläche des Hohlkegelstumpfs und dem halben Hohlzylinder ein zusätzliches Flächensegment eingebracht wird, welches den geraden halben Hohlzylinder und die schräge Mantelfläche des geraden Hohlkegelstumpfs miteinander so verbindet, dass die Form des Anschlussstücks an der unteren Seite des Anschlussstücks eine Führung für das zu transportierende Lebensmittel ergibt, und durch die vorteilhafte, trichterförmige Ausgestaltung des oberen Teils das Lebensmittel ideal dem Behälterauslass zuführt. Die Zuführung des Lebensmittels erfolgt hierbei schonend, und das durch die Förderschnecke transportierte und aufgelockerte Transportgut wird unter Rücksicht auf dessen Beschaffenheit in die Richtung des Beschickungsrohrs, welches sich im Regelfall prozessablauftechnisch nach dem Behälterauslass **11** befindet, transportiert.

Das Anschlussstück zur Frontwand **7** selbst sollte aus einem Material ausgeführt sein, welches in der Lebensmittelindustrie bzw. in lebensmittelverarbeitenden Betrieben zugelassen ist und nach Maßgabe der Anwendung entsprechend langlebig und robust sein. Aufgrund der Beschaffenheit und der Materialeigenschaften kann dieses Anschlussstück vorzugsweise aus rostfreiem Edelstahl, beispielsweise 1.4301/ AISI 304, gefertigt sein.

Da bei jeder Umstellung des zu fördernden oder zu verpackenden Lebensmittels eine Komplettreinigung der medienführenden Anlagenteile aus Hygienegründen und wegen der verschiedenen Farbgebung der jeweiligen Lebensmittels durchgeführt werden muss, ist es auch bei diesem Anschlussstück unerlässlich, dass die Montage und Demontage des Bauteils möglichst einfach und schnell vonstattengeht.

In dieser bevorzugten Ausführung, wird das Anschlussstück mittels einer Verdrehsicherung **8** und einer entsprechenden Verschraubungsdichtung **9** gegenüber dem Behälterauslass **11** ausgeführt, welche überdies auch eine geforderte Stabilität des Anschlussstücks gewährleistet.

### Bezugszeichenliste:

1) Antriebsmotor
2) Verbindungsbolzen
3) Lagerflansch
4) Schneckenwelle (Ausführung: Hohlwelle)
5) Verschraubung vorzugsweise nach DIN 11850
6) Rückwand Vorratsbehälter
7) Anschlussstück zur Frontwand
8) Verdrehsicherung
9) Verschraubungsdichtung
10) Verbindungsmutter
11) Behälterauslass

## Patentansprüche

1. Vorrichtung zur Förderung von heterogenen, empfindlichen und nicht pumpfähigen Lebensmitteln mit geringem Flüssigkeitsanteil beinhaltend zumindest:
- einen Antriebsmotor (1),
- eine Förderschnecke (4), welche als Hohlschnecke ausgeführt ist und durch eine koaxiale schraubenlinienförmige Ausführung eine Förderung der Lebensmittel in axialer Richtung der Förderschnecken (4) bewirken, wobei diese am antriebsfernen Ende zu einem Teil als seelenlose Hohlschnecke ausgeführt ist und am antegraden Ende zusätzliche Dornen aufweist, welche radial zum Rotationsmittelpunkt der Förderschnecke (4) ausgerichtet sind,
- einen Lagerflansch (3),
- ein Anschlussstück (7) zur Frontwand.

2. Vorrichtung nach Anspruch 1, **dadurch gekennzeichnet, dass** die rotierende Welle des Antriebsmotors (1) entweder direkt oder mittels einer entsprechenden formschlüssigen Verbindung mit einer Förderschnecke (4) verbunden ist.

3. Vorrichtung nach Anspruch 1 oder 2, **dadurch gekennzeichnet, dass** die Vorrichtung und die darin angeordnete rotierende Welle des Antriebsmotors (1) in Verbindung mit der Förderschnecke (4), durch eine relative Drehung gegenüber dem feststehenden Gehäuse eine Förderwirkung auf das darin befindliche Lebensmittel ausübt.

4. Vorrichtung nach Anspruch 1 bis 3, **dadurch gekennzeichnet, dass** der Antriebsmotor (1) und die Förderschnecke (4) über eine Lagerflanschverbindung (3) miteinander verbunden sind und die rotierende Welle des Antriebsmotors (1) die Hohlschnecke in eine gleichförmige Rotationsbewegung versetzt.

5. Vorrichtung nach Anspruch 1 oder 4, **dadurch gekennzeichnet, dass** die Verbindung zwischen der Hohlschnecke und der rotierenden Welle des Antriebsmotors (1) durch einen Verbindungsbolzen (2) gesichert und mithilfe eines Lagerflansches (3) abgedichtet ist.

6. Vorrichtung nach Anspruch 1 bis 5, **dadurch gekennzeichnet, dass** das antriebsferne Ende des Gehäuses geometrisch so ausgeführt ist, dass das Anschlussstück (7), welches am antegraden Ende der Förderschnecke (4) vorgesehen ist, einen schonenden Umgang mit dem Lebensmittel gewährleistet.

7. Vorrichtung nach Anspruch 1 bis 6, **dadurch gekennzeichnet, dass** alle Verbindungsstücke, so ausgeführt sind, dass eine einfache Reinigung ohne zusätzliches Spezialwerkzeug sicher gestellt ist.

8. Vorrichtung nach Anspruch 1 bis 7, **dadurch gekennzeichnet, dass** sie aus Materialien hergestellt ist, die den geltenden Vorschriften für Lebensmittel entsprechen.

9. Vorrichtung nach Anspruch 1 bis 8, **dadurch gekennzeichnet, dass** sämtliche Verbindungsstücke so ausgeführt sind, dass sie einen sicheren und einwandfreien Betrieb der Förderanlage gewährleisten.

## Claims

1. A device for conveying heterogeneous, sensitive food that cannot be pumped, comprising a low liquid content containing at least:
- a drive motor (1),
- a screw conveyor (4), which is designed as hollow worm and which effect a conveying of the food in axial direction of the screw conveyors (4) due to a coaxial, helical design, wherein, at the end, which is located at a distance from the drive, a part of said screw conveyor (4) is designed as coreless hollow worm and, at the antegrade end, has additional pins, which are oriented radially to the center of rotation of the screw conveyor (4),
- a bearing flange (3),
- a connecting piece (7) to the front wall.

2. The device according to claim 1, **characterized in that** the rotating shaft of the drive motor (1) is either directly or indirectly connected to a screw conveyor (4) by means of a corresponding positive connection.

3. The device according to claim 1 or 2, **characterized in that**, in connection with the screw conveyor (4), the device and the rotating shaft of the drive motor (1) arranged therein exerts a conveying effect on the food located therein by means of a relative rotation with respect to the stationary housing.

4. The device according to claim 1 to 3, **characterized in that** the drive motor (1) and the screw conveyor (4) are connected to one another via a bearing flange connection (3) and that the rotating shaft of the drive motor (1) sets the hollow worm into a steady motion.

5. The device according to claim 1 or 4, **characterized in that** the connection between the hollow worm and the rotating shaft of the drive motor (1) is secured by means of a connecting bolt (2) and is sealed with the help of a bearing flange (3).

6. The device according to claim 1 to 5, **characterized in that** the end of the housing, which is located at a distance from the drive, is designed such that the connecting piece (7), which is provided at the antegrade end of the screw conveyor (4), ensures a gentle handling of the food.

7. The device according to claim 1 to 6, **characterized in that** all of the connecting pieces are designed such that a simple cleaning is ensured without an additional special tool.

8. The device according to claim 1 to 7, **characterized in that** it is made of materials, which comply with the applicable rules for food.

9. The device according to claim 1 to 8, **characterized in that** all of the connecting pieces are designed such that they ensure a secure and flawless operation of the conveyor system.

## Revendications

1. Dispositif destiné à transporter des produits alimentaires hétérogènes, sensibles et non pompables, à faible part de liquide, comportant au moins
- un moteur d'entraînement (1),
- une vis sans fin (4), laquelle est conçue sous la forme d'une vis creuse et qui par une structure coaxiale de forme hélicoïdale provoque un transport des produits alimentaires en direction axiale des vis sans fin (4), celle-ci étant conçue en partie, sur l'extrémité éloignée de l'entraînement en tant que vis creuse sans âme et sur l'extrémité antérograde comportant des tourillons supplémentaires, lesquels sont orientés en direction radiale du point central de rotation de la vis sans fin (4),
- une bride de palier (3),
- une pièce de raccordement (7) sur la paroi frontale.

2. Dispositif selon la revendication 1, **caractérisé en ce que** l'arbre en rotation du moteur d'entraînement (1) est relié soit directement ou au moyen d'un assemblage correspondant par complémentarité de forme avec une vis sans fin (4).

3. Dispositif selon la revendication 1 ou la revendication 2, **caractérisé en ce que** le dispositif et l'arbre en rotation du moteur d'entraînement (1) placé dans celui-ci, en association avec la vis sans fin (4), par une rotation relative par rapport au carter stationnaire exerce un effet de transport sur le produit alimentaire qui se trouve en son intérieur.

4. Dispositif selon la revendication 1 à 3, **caractérisé en ce que** le moteur d'entraînement (1) et la vis sans fin (4) sont reliés l'un à l'autre par l'intermédiaire d'un assemblage par bride de palier (3) et l'arbre en rotation du moteur d'entraînement (1) déplace la vis creuse en un mouvement de rotation uniforme.

5. Dispositif selon la revendication 1 ou la revendication 4, **caractérisé en ce que** la liaison entre la vis creuse et l'arbre en rotation du moteur d'entraînement (1) est bloquée par un boulon d'assemblage (2) et étanchéifiée à l'aide d'une bride de palier (3).

6. Dispositif selon la revendication 1 à 5, **caractérisé en ce que** l'extrémité du carter éloignée de l'entraînement est géométriquement conçue de telle sorte que la pièce de raccordement (7), laquelle es prévue sur l'extrémité antérograde de la vis sans fin (4) assure une manipulation préservatrice du produit alimentaire.

7. Dispositif selon la revendication 1 à 6, **caractérisé en ce que** toutes les pièces d'assemblage sont conçues de telle sorte qu'un nettoyage simple sans outil spécial supplémentaire soit assuré.

8. Dispositif selon la revendication 1 à 7, **caractérisé en ce qu'**il est fabriqué dans des matières qui correspondent aux dispositions en vigueur pour les produits alimentaires.

9. Dispositif selon la revendication 1 à 8, **caractérisé en ce que** toutes les pièces d'assemblage sont conçues de telle sorte qu'elles assurent un fonctionnement sûr et parfait de l'installation de transport.
